# EUROPÄISCHE PATENTANMELDUNG

(11) **EP 4 462 015 A1**
(43) Veröffentlichungstag der Anmeldung: **13.11.2024**
(21) Anmeldenummer: 24020136.8
(22) Anmeldetag: 06.05.2024
(51) Int. Cl.: F21S 43/237, B60R 19/52, F21S 43/235, F21S 43/245, F21S 43/27, B60Q 1/28

(54) **DURCHLEUCHTETE KÜHLERGRILL-BAUGRUPPE**

(30) Priorität: 11.05.2023 CZ 20230192
(71) Anmelder: Skoda Auto a.s., 29301 Mladá Boleslav (CZ)
(72) Erfinder: Horváth, Josef, 29301 Mladá Boleslav (CZ); Knebl, Pavel, 29301 Mladá Boleslav (CZ); Kovanda, David, 46006 Liberec 6 (CZ)

(57) **Zusammenfassung**

Gegenstand der Erfindung ist eine durchleuchtete Kühlergrill-Baugruppe mit einer lichtdurchlässigen vorderen Abdeckung (1) und einer lichtundurchlässigen hinteren Abdeckung (2), zwischen denen der Innenraum des Grills definiert ist. In diesem Raum befinden sich ein Lichtleiter (3), eine Halterung (4) für den Lichtleiter (3) und mindestens zwei auf die Enden des Lichtleiters gerichtete Lichtquellen. Der Lichtleiter (3) ist mittels der Halterung (4) des Lichtleiters (3) an der hinteren Abdeckung (2) befestigt und umfasst zwei Zweige, die über ein Verbindungsteil (7) fest verbunden sind. Die Zweige und das Verbindungsteil sind aus einem Materialstück gefertigt. Jeder der Zweige umfasst eine Fläche (8) für den Lichtaustritt, die sich über den größten Teil der Länge des Lichtleiters (3) erstreckt und auf die vordere Abdeckung (1) gerichtet ist.

## Beschreibung

### Technisches Sachgebiet

Die Erfindung betrifft einen Kraftfahrzeug-Kühlergrill mit Beleuchtungsfunktion. Dieser durchleuchtete Kühlergrill umfasst Lichtquellen und lichtleitende Elemente.

### Stand der Technik

Der Kühlergrill eines Kraftfahrzeugs dient in erster Linie dazu, die Luftwege zum Motor, zum Kühler des Kraftfahrzeugs und/oder zum Innenraum durch die Klimaanlage abzugrenzen. Standardmäßig handelt es sich dabei um ein undurchsichtiges Kunststoffteil, das in einer Montageöffnung am Vorderteil des Kraftfahrzeugs befestigt wird, wobei dieses Kunststoffteil eine Menge von Öffnungen für den Luftdurchlass aufweist. In den letzten Jahren wird der Kühlergrill häufig durch eine Beleuchtungsbaugruppe ergänzt oder ersetzt; ein solcher durchleuchteter Kühlergrill beleuchtet dann den Raum vor dem Fahrzeug und erhöht die Sichtbarkeit des Fahrzeugs, so dass er zum Beispiel als Tagfahrlicht oder im Nachtbetrieb als Teil der Begrenzungsleuchten/Abblendlicht genutzt werden kann. Darüber hinaus ist der beleuchtete Grill ein sehr markantes Designelement des Kraftfahrzeugs, da er eine relativ große Fläche am Vorderteil des Kraftfahrzeugs abdeckt, die am besten sichtbar ist. Durch die Form der beleuchtete Grill lassen sich beispielsweise Fahrzeuge einer bestimmten Marke deutlich von anderen Fahrzeugen unterscheiden. Die beleuchteten Grills können weiterhin zur Luftansaugung verwendet werden, oder sie können die Montageöffnung für den Grill komplett verschließen und die Luft kann dann zum Beispiel durch ein anderes Gitter im Stoßfänger zugeführt werden.

Ein Beispiel für einen beleuchteten Kühlergrill ist z. B. aus dem Dokument WO200518987 bekannt. Dieses Dokument beschreibt einen Kühlergrill mit lichtundurchlässigen Rippen, wobei dieser Kühlergrill von hinten durch einen Lichtleiter mit Punktlichtquellen an den Enden unterbelichtet wird. Das Licht aus dem Lichtleiter beleuchtet so die Rippen, die das Licht vor das Kraftfahrzeug reflektieren. In einer Ausführung dieser Lösung ist der Lichtleiter so angeordnet, dass er durch die Öffnungen für den Luftdurchlass im Kühlergrill sichtbar ist, so dass der Lichtleiter auch direkt vor Kraftfahrzeug leuchtet. Die Homogenität des ausgestrahlten Lichts ist bei dieser Lösung jedoch unbefriedigend, sowie die Lichtintensität selbst kann unzureichend sein, da die weiter vom Lichtleiter entfernten Rippen mit geringerer Intensität und auf einem kleineren Teil ihrer Fläche beleuchtet werden als die näher am Lichtleiter liegenden Rippen, und bei der Ausführung mit einem sichtbaren Lichtleiter wird dieser Lichtleiter teilweise von den Rippen verdeckt. Ein weiterer Nachteil dieser Lösung ist die geringere Veränderbarkeit des Aussehens des Kühlergrills - der direkt leuchtende Teil des Grills ist immer nur der Teil des verwendeten Lichtleiters mit einem konstanten Querschnitt, der durch die Öffnungen im Grill sichtbar ist.

Ein weiteres Beispiel für einen beleuchteten Kühlergrill ist z. B. im Patent CZ 309030 B6 beschrieben, bei dem der Kühlergrill als geschlossenes System gestaltet ist, so dass die Lichtkomponenten von der äußeren Umgebung getrennt sind. Die Beleuchtung erfolgt hier über einen Lichtleiter, der Lichtrippen bildet. Dies ermöglicht eine beträchtliche Variabilität bei der Gestaltung der Beleuchtung, aber die Konstruktion und die Montage dieses Grills können relativ kompliziert sein, was die Herstellungskosten erhöht.

Daher wäre es sinnvoll, eine Lösung für einen beleuchteten Kühlergrill zu finden, die eine homogenere oder intensivere Beleuchtung ermöglicht, ohne die Montage oder Herstellung des Grills grundlegend zu erschweren.

### Zusammenfassung der Erfindung

Die Mängel der aus dem Stand der Technik bekannten Lösungen werden durch die durchleuchtete Kühlergrill-Baugruppe, die für die Montage im Vorderteil eines Kraftfahrzeugs vorgesehen ist, bis zu einem gewissen Grad beseitigt. Diese Baugruppe umfasst eine durchsichtige vordere Abdeckung und eine undurchsichtige hintere Abdeckung, zwischen denen der Innenraum des Grills abgegrenzt ist. So ist die vordere Abdeckung der Teil, der näher am vorderen Raum des Kraftfahrzeugs liegt und somit der Teil, der sichtbar ist, wenn das Kraftfahrzeug normalerweise von vorne betrachtet wird, während die hintere Abdeckung, die die Baugruppe vom Raum unter der Motorhaube trennt, bei normaler Betrachtung des Kraftfahrzeugs im Wesentlichen unsichtbar sein kann. Beide Abdeckungen sind bspw. aus Kunststoff. Außerdem umfasst die Baugruppe im Innenraum des Grills einen länglichen Lichtleiter, eine Halterung des Lichtleiters und mindestens zwei Lichtquellen. Der Lichtleiter ist beispielsweise mindestens acht- oder zehnmal länger als die größte Abmessung seines Querschnitts (z. B. die Höhe). Der Lichtleiter kann klar oder farbig sein, ebenso wie die vordere Abdeckung. Er kann z. B. aus PMMA oder Plexiglas hergestellt werden. Vorzugsweise geht der Lichtleiter durch den größten Teil der Breite des Grills durch.

Der Lichtleiter ist mit der Halterung des Lichtleiters an der hinteren Abdeckung befestigt. Der Lichtleiter kann z. B. geklebt, geschraubt und/oder formschlüssig mit der Halterung verbunden werden. Die Halterung kann auf die gleiche Weise an der hinteren Abdeckung befestigt werden, oder die Halterung kann in einem Stück mit der hinteren Abdeckung hergestellt werden. Der Lichtleiter umfasst einen ersten Zweig, einen zweiten Zweig und ein Verbindungsteil. Alle diese drei Komponenten sind aus einem einzigen Stück lichtdurchlässigen Materials gefertigt und verlaufen über den größten Teil der Länge des Lichtleiters parallel zueinander. Der erste Zweig ist über den größten Teil der Länge des Lichtleiters durch ein Verbindungsteil fest mit dem zweiten Zweig verbunden. Insbesondere können die beiden Zweige über die gesamte Länge des Lichtleiters nebeneinander verlaufen, d. h. die Länge jedes Zweigs entspricht dann der Länge des Lichtleiters, wobei das Verbindungsteil die Zweige über den größten Teil ihrer Länge verbindet. Jeder der Zweige umfasst eine Fläche für den Lichtaustritt, die sich über den größten Teil der Länge des Lichtleiters erstreckt und auf die vordere Abdeckung gerichtet ist. Außerdem ist jeder der Zweige an mindestens einem Ende mit einer Fläche für den Lichteinlass versehen, auf die mindestens eine der Lichtquellen gerichtet ist.

Die Fläche für den Lichtaustritt ist bevorzugt gebogen. Das Licht tritt daraus aus und geht zur vorderen Abdeckung und durch sie nach außen in den Raum vor dem Kraftfahrzeug. Die Baugruppe dient somit bspw. der Fahrbahnbeleuchtung, erhöht die Sichtbarkeit des Kraftfahrzeugs und/oder dient als Design-Beleuchtungselement. Gegenüber der Fläche für den Lichtaustritt kann sich die Rückfläche des betreffenden Zweigs befinden, die mit Auskoppelelementen versehen sein kann. Das Licht breitet sich der Länge des Lichtleiters entlang aus, wird von den Auskoppelelementen zur Fläche für den Lichtaustritt reflektiert und geht durch diese nach außen. Jeder Zweig kann eine oder mehrere Flächen für den Lichteinlass aufweisen, insbesondere kann er zwei Flächen aufweisen - eine an jedem Ende. Eine oder mehrere Lichtquellen, z. B. LEDs, werden dann auf die Fläche für den Lichteinlass gerichtet. Die Zweige können so gebogen sein, dass sie an ihren Enden nach hinten zeigen und im mittleren Teil seitlich verlaufen. Das Verbindungsteil kann eine Breite haben, die z. B. kleiner oder gleich der halben Breite eines der Zweige ist. Die Breite ist dann das Maß im Querschnitt des Lichtleiters, das senkrecht zur Verbindungslinie der Achsen der beiden Zweige gemessen wird. Wenn die Zweige übereinander angeordnet sind, was eine günstige Anordnung ist, verläuft die Breite daher im Wesentlichen parallel zur Richtung der Lichtstrahlung aus dem Grill. Mit dieser Breite kann eine feste Verbindung der Zweige gewährleistet werden, ohne dass das Verbindungsteil die Lichtausbreitung im Lichtleiter wesentlich beeinflusst. Dennoch kann es das Licht in gewissem Maße leiten und ausstrahlen.

Beide Zweige können im Wesentlichen die gleiche Form haben, d. h. insbesondere den gleichen Querschnitt. Sie können aber auch unterschiedlich sein. Sie können Licht in dieselbe Richtung oder in verschiedene Richtungen ausstrahlen, z. B. eine höher und eine niedriger. Die Lichtquellen können so gesteuert werden, dass beide Zweige gleichmäßig beleuchtet werden, d. h. ihre Quellen sind immer gleichzeitig ein- oder ausgeschaltet. Es ist aber auch möglich, sie einzeln zu beleuchten. Es ist auch möglich, einen Lichtleiter mit mehr als zwei Zweigen und damit mehr als einem Verbindungsteil zu erstellen. Der dritte und jeder weitere Zweig werden dann analog zur Beschreibung des ersten und zweiten Zweigs umgesetzt.

Der Vorteil der Verwendung eines Lichtleiters, der aus einem Stück gefertigt ist, aber mehrere fest miteinander verbundene Zweige aufweist, wo jeder Zweig im Grunde einen separaten länglichen Lichtleiter ersetzt, liegt in der Erhöhung der Lichtstärke, ohne dass sich die Produktionskosten wesentlich erhöhen und die Herstellung oder der Einbau komplizierter werden. Der gesamte Lichtleiter wird gleichzeitig in einer Halterung montiert, kann in einer Form hergestellt werden usw. Dabei wird eine doppelte Fläche für den Lichtaustritt bereitgestellt und beide diese Flächen sind individuell gestaltbar bzw. modifizierbar. Es ist auch möglich, die Flächen für den Lichtaustritt der verschiedenen Zweige unterschiedlich auszurichten, was die Variabilität der Baugruppe stark erhöht - es ist möglich, die Neigung der Beleuchtung einzelner Zweige, die Lichtintensität usw. durch das Verstellen des Lichtleiters einzustellen, ohne z. B. die Halterung wechseln zu müssen. Die Montage dieses Lichtleiters ist genauso (un)anspruchsvoll wie die Montage eines normalen länglichen Lichtleiters mit einem einzigen Zweig. Im Stand der Technik müsste man, um eine ähnliche Funktionalität zu erreichen, mehrere Lichtleiter herstellen und dann die Lichtleiter fest miteinander verbinden, die Halterung so modifizieren, dass sie mehrere Lichtleiter aufnehmen kann, oder die hintere Abdeckung so verändern, dass sie mehrere Halterungen aufnehmen kann, usw. All diese Vorgänge würden die Herstellung und Montage der Baugruppe sehr kompliziert machen.

Der erste Zweig und/oder der zweite Zweig können im Querschnitt eine Vorderseite, eine Rückseite und zwei Lateralseiten haben, die die Vorderseite mit der Rückseite verbinden. Die Vorderseite ist dann Teil der Fläche für den Lichtaustritt, wobei sie von diesem Querschnitt aus nach außen gebogen ist, und die beiden Lateralseiten sind nach innen gebogen. Diese Form des Lichtleiters / des Zweigs des Lichtleiters wird manchmal auch als Pilzform bezeichnet. Die Rückseite kann gerade sein, so dass sie mit Auskoppelelementen versehen werden kann. Durch Veränderung des Biegeradius oder der Größe der Vorderseite kann die Lichtintensität oder der Abstrahlwinkel reguliert werden. Es ist auch möglich, die Lateralseiten gerade zu gestalten. Das Verbindungsteil kann dann von der Seite an den Zweig angebracht werden, entweder an der Lateralseite oder am Rand der Vorderseite.

Alternativ können die Querschnitte auch z.B. kreisförmig sein, optional mit einer geraden Rückseite. So kann jeder der Zweige über den größten Teil seiner Länge, z. B. bei den mittleren 90 %, einen konstanten Querschnitt aufweisen, ohne dass Auskoppelelemente, Bolzenöffnungen usw. berücksichtigt werden.

Jeder der Zweige kann eine Reihe von Auskoppelelementen umfassen, die sich gegenüber der Fläche für den Lichtaustritt befinden. Es kann sich zum Beispiel um gleich geformte und in gleichem Abstand angeordnete Kerben, Zähne oder Vorsprünge handeln.

Der Lichtleiter kann über den größten Teil seiner Länge symmetrisch zu der Ebene sein, die zwischen den Zweigen durch das Verbindungsteil verläuft. So können die beiden Zweige über den größten Teil ihrer Länge identisch sein. Sie können eine unterschiedliche Form oder Neigung haben, zum Beispiel an ihren Enden, wo sie am Lichtquellenträger befestigt sind. Diese Symmetrieebene verläuft dann ungefähr in der Richtung der Lichtausstrahlung.

Der Lichtleiter kann eine Rille des Lichtleiters aufweisen, die sich über den größten Teil, z. B. mindestens drei Viertel, seiner Länge erstreckt, wobei die Rille durch einen Teil des ersten Zweigs, einen Teil des zweiten Zweigs und einen Teil des Verbindungsteils begrenzt wird. Diese Rille des Lichtleiters ist dann zur hinteren Abdeckung gerichtet, und die Halterung des Lichtleiters enthält einen Vorsprung, der in die Rille des Lichtleiters eingreift. Dadurch kann der Lichtleiter zumindest teilweise durch den Formschluss in der Halterung gehalten werden, ihre Auflagefläche kann vergrößert werden und so können mögliche Vibrationen reduziert und die Montage vereinfacht werden. Zwischen dem Vorsprung und dem Boden der Rille kann ein Spielraum für die Auskoppelelemente vorgesehen werden.

Das Verbindungsteil kann eine Vorderwand und eine Rückwand haben, die parallel zueinander verlaufen, wobei die Vorderwand zwischen den Flächen für den Lichtaustritt der beiden Zweige verläuft und die Rückwand näher an der hinteren Abdeckung liegt als die Vorderwand. Das Verbindungssteil hat im Prinzip einen rechteckigen oder trapezförmigen Querschnitt, was die Herstellung vereinfachen kann. Es ist aber auch möglich, die Vorderwand zum Beispiel nach außen zu biegen. Neben der Verbindungsfunktion kann das Verbindungsteil in gewissem Umfang auch Lichtleitung oder Lichtausstrahlung bieten.

Die Baugruppe kann außerdem einen optischen Filter umfassen, der zwischen dem Lichtleiter und der vorderen Abdeckung angeordnet ist. Dieser Filter kann in Form eines separaten Teils, z. B. einer Platte, ausgeführt sein. Er kann aber auch Teil der vorderen Abdeckung sein. Die optische Funktion kann z. B. durch eine Oberflächenbehandlung des Filters erreicht werden, zum Beispiel indem er mit mikrooptischen Elementen oder Kerben zur Homogenisierung des Lichts usw. versehen wird. Der Filter kann z. B. aus Plexiglas (PMMA, PC usw.) hergestellt sein. Der Filter kann also dazu dienen, die Homogenität des vom Grill ausgestrahlten Lichts zu erhöhen, das Licht in die gewünschte Richtung zu lenken, die Gefahr der Blendung durch entgegenkommende Fahrer zu verringern usw.

Die Halterung des Lichtleiters kann eine Rille der Halterung aufweisen, wobei der Lichtleiter zumindest teilweise in die Rille der Halterung eingreift. Der erste Zweig und der zweite Zweig befinden sich dann teilweise in der Rille der Halterung, wobei die Fläche für den Lichtaustritt jedes der Zweige aus der Rille der Halterung herausragt. Die Rille kann den Lichtleiter einklemmen, er kann aber auch frei darin platziert und z.B. geklebt oder geschraubt werden. Diese Rille der Halterung kann also z. B. einen rechteckigen oder trapezförmigen Querschnitt haben, sie kann aber auch eine kompliziertere Form haben, z. B. kann es einen Vorsprung zum Eingreifen in die Rille des Lichtleiters haben, wie oben beschrieben.

Die vordere Abdeckung kann von hinten mit einer undurchsichtigen Schicht versehen sein. Diese Schicht befindet sich dann nur auf einem Teil der Abdeckungsoberfläche, um das Licht durch den Rest der Abdeckung hindurchzulassen. Die undurchsichtige Schicht kann zum Beispiel eine oder mehrere beliebig geformte Lücken aufweisen, um Licht durchzulassen. Die Schicht kann z. B. eine Farbschicht sein. Die Lücken können z. B. dadurch entstehen, dass sie nach dem Auftragen dieser Schicht herausgeschnitten werden, z. B. mit einem Laser. Durch die Verwendung dieser Schicht kann das Design der Baugruppe des durchleuchteten Kühlergrills weiter verändert werden, d. h. das Aussehen des ausgestrahlten Lichts kann verändert werden sowie es kann bestimmt werden, welche Teile der vorderen Abdeckung durchleuchtet werden und welche nicht usw. Im Prinzip lässt sich jedes beliebige Lichtmuster auf der vorderen Abdeckung erzeugen. Neben dem eigentlichen Aussehen kann auch die Beleuchtungsfunktion des Grills angepasst werden, um beispielsweise die Blendung entgegenkommender Fahrer zu verringern, indem der Grill an bestimmten Stellen der vorderen Abdeckung abgeschattet wird.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 eine schematische Darstellung des Querschnitts durch die durchleuchtete Kühlergrill-Baugruppe in einer beispielhaften Ausführung, wobei die relative Position der vorderen und der hinteren Abdeckung sowie die Position der Halterung des Lichtleiters mit dem Lichtleiter zwischen den Abdeckungen sichtbar sind,
Fig. 2 eine schematische Darstellung des Querschnitts des Lichtleiters aus der Baugruppe in Fig. 1, wobei die Form der beiden Zweige und des Verbindungsteils sichtbar ist,
Fig. 3 eine schematische Darstellung des Querschnitts eines der Zweige, wobei der Querschnitt pilzförmig ist,
Fig. 4 eine schematische Darstellung mehrerer alternativer Querschnitte des Lichtleiters,
Fig. 5 eine schematische Darstellung eines alternativen Querschnitts der Baugruppe, wobei im Vergleich zum Querschnitt in Fig. 1, die Rillen auf dem optischen Filter und der Vorsprung auf der Halterung des Lichtleiters, auf dem der Lichtleiter mit seiner zwischen den Zweigen definierten Rille montiert ist, sichtbar sind,
Fig. 6 eine schematische Darstellung der Vorderansicht eines Teils des Lichtleiters.

### Ausführungsbeispiele der Erfindung

Die Erfindung wird anhand von Ausführungsbeispielen unter Bezugnahme auf die entsprechenden Zeichnungen näher erläutert.

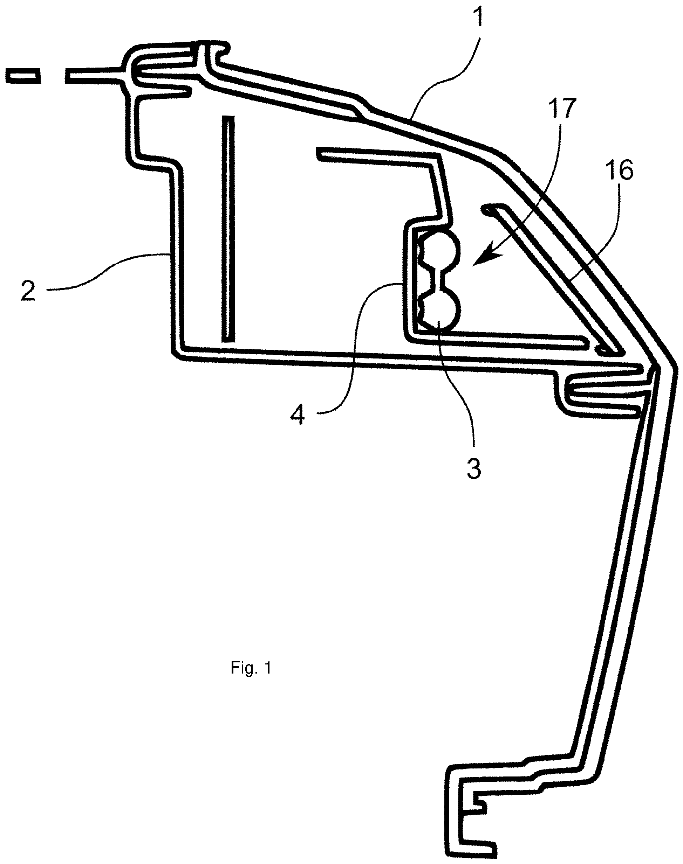

Eine beispielhafte Ausführung eines erfindungsgemäßen durchleuchteten Grills ist in den Fig. 1-3 und 6 dargestellt. Diese Baugruppe ist zur Befestigung in eine Montageöffnung am Vorderteil eines Personenkraftwagens anstelle der serienmäßigen unbeleuchteten Kühlergrills bestimmt. Die Baugruppe umfasst eine durchsichtige vordere Abdeckung 1, z. B. aus transparentem, farblosem PMMA oder Polykarbonat, und eine hintere Abdeckung 2, die z. B. aus schwarzem Polypropylen hergestellt sein kann. Zwischen den beiden Abdeckungen befindet sich der Innenraum des Grills, in dem die anderen Komponenten befestigt sind. Dieser Raum kann genutzt werden, um die Luft in den Motorraum, insbesondere zum Kühler, zu leiten, beispielsweise können in der vorderen sowie in der hinteren Abdeckung 2 vertikale Lüftungsöffnungen vorgesehen werden. Es ist jedoch auch möglich, diesen Innenraum gegen die Außenwelt abzuschließen und die Luft außerhalb dieses Raumes in den Motorraum zu leiten, z. B. durch die Stoßstange. Die vordere Abdeckung 1 kann dann eine einheitliche Fläche bilden und mit der hinteren Abdeckung 2 über ihren gesamten Umfang wasser- und luftdicht verbunden sein. Eine solche Ausführung kann besonders für Elektrofahrzeuge geeignet sein.

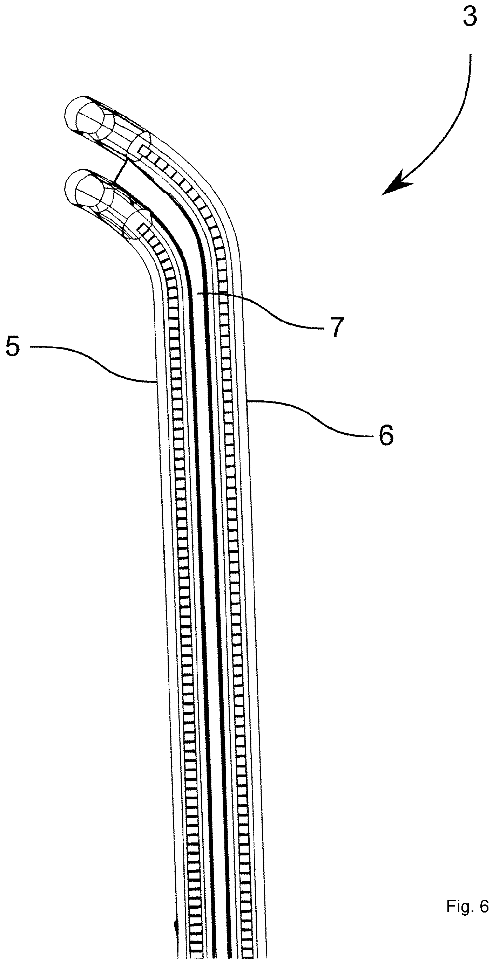

Im Innenraum des Grills befindet sich ein Lichtleiter 3 und eine Halterung 4 des Lichtleiters 3, die für die Befestigung des Lichtleiters 3 an der hinteren Abdeckung 2 sorgt, und Lichtquellen, z. B. LED, zur Versorgung des Lichtleiters 3 mit Licht, der dieses Licht durch die vordere Abdeckung 1 aus dem Grill heraus ausstrahlt. Der Lichtleiter 3 ist doppelt, um eine größere Lichtintensität zu gewährleisten, aber gleichzeitig aus einem fest verbundenen Stück, um die Montage nicht zu erschweren. Der Lichtleiter 3 umfasst somit den ersten Zweig 5 und den zweiten Zweig 6, die über den größten Teil ihrer Länge, bei der gezeigten Ausführung etwa über die mittleren 90 % ihrer Länge, durch ein Verbindungsteil 7 fest verbunden sind und parallel zueinander verlaufen. An beiden Enden des Lichtleiters 3, wo jeder der Zweige mit einer Fläche für den Lichteintritt versehen ist, auf die mindestens eine der Lichtquellen gerichtet ist, können die Zweige getrennt werden, was die Montage oder die Einkopplung des Lichts erleichtern kann. In der dargestellten Ausführung ist der Lichtleiter 3 in seinem mittleren Teil gerade, etwa auf 80 % seiner Länge, die über die Breite des Kraftfahrzeugs verläuft, und an den Enden gebogen (siehe Fig. 6), um den Lichtleiter 3 zu den Lichtquellen zu bringen. Bei anderen Ausführungen kann dieser mittlere Teil jedoch auch gebogen sein, oder kann im Gegenteil der gesamte Lichtleiter 3 gerade sein, z. B. können dann die Lichtquellen auch in Richtung der Querachse des Kraftfahrzeugs gerichtet sein.

In der gezeigten Ausführung umfasst die vordere Abdeckung 1 eine Schicht aus undurchsichtiger, insbesondere z. B. schwarzer Farbe, um einen Teil des Lichts zu absorbieren, das von hinten vom Lichtleiter 3 auf diese Abdeckung fällt. Diese Schicht befindet sich nur auf einem Teil der Rückseite der vorderen Abdeckung 1, der Rest der vorderen Abdeckung 1 ist ohne Farbe und lässt somit das Licht des Lichtleiters 3 aus der Baugruppe in Richtung vor das Kraftfahrzeug austreten. Die Farbschicht kann zum Beispiel eine Vielzahl von Ausschnitten oder Lücken für den Lichtdurchlass aufweisen, die beispielsweise in einem regelmäßigen Muster angeordnet sein können. Es kann sich zum Beispiel um rechteckige Lücken, ein rechteckiges Gitter, Streifen, die z. B. über die Länge oder Breite des Grills verlaufen, Rauten, Wellen usw. handeln. Ebenso können Lücken in Form des Herstellerlogos, in Form von Text usw. verwendet werden. Diese Lücken können nach dem Auftragen der Farbe z. B. mit einem Laser ausgeschnitten werden. Es ist auch möglich, die Farbe selektiv aufzutragen, z. B. kann vor dem Lackieren eine Abdeckmaske auf die vordere Abdeckung 1 aufgebracht, die die nicht zu lackierenden Teile der Oberfläche definiert, und die Abdeckmaske wird nach dem Auftragen der Farbe entfernt. Anstelle von Farbe kann z. B. eine Metallisierung, eine Folienschicht usw. verwendet werden. In anderen Ausführungen kann die vordere Abdeckung 1 jedoch auch ohne diese Schicht hergestellt werden, so dass sie völlig transparent ist.

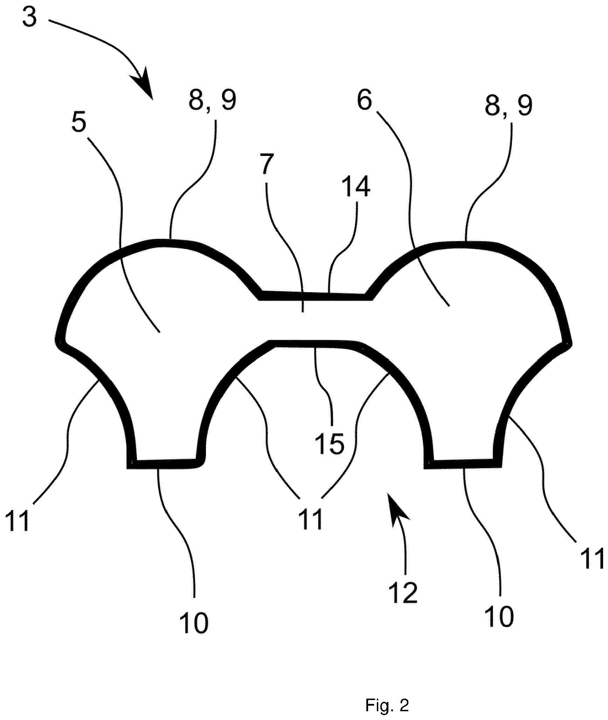

Der Querschnitt des Lichtleiters 3 ist in Fig. 2 dargestellt. Der Querschnitt des Lichtleiters 3 ist in dieser Ausführung symmetrisch um die Achse, die zwischen den Zweigen verläuft. Jeder der Zweige umfasst zwei Flächen für den Lichteintritt, eine an jedem freien Ende. Diese Flächen sind senkrecht zur Achse des Lichtleiters 3 und gleichzeitig zur Achse des bestimmten Zweigs, d. h. sie haben die Form des Querschnitts des Zweigs. Auf jede von ihnen ist mindestens eine Lichtquelle gerichtet, z. B. ist auf jede der Flächen für den Lichteintritt ein LED-Feld, z. B. eine Gruppe von vier LEDs gerichtet. Die Lichtquellen können z. B. auf einer Leiterplatte untergebracht sein, wobei diese Platten an jedem Ende für beide Zweige gemeinsam sein können. Sie können an der Halterung 4 des Lichtleiters 3 befestigt sein oder eine eigene Halterung haben, die an der Halterung 4 des Lichtleiters 3 oder an der hinteren Abdeckung 2 befestigt ist. Die Stromversorgung kann über ein Kabel mit einem Stecker von hinten durch eine Tülle in der hinteren Abdeckung 2 geführt werden. Ebenso können z.B. Lüftungselemente durch die hintere Abdeckung 2 führen.

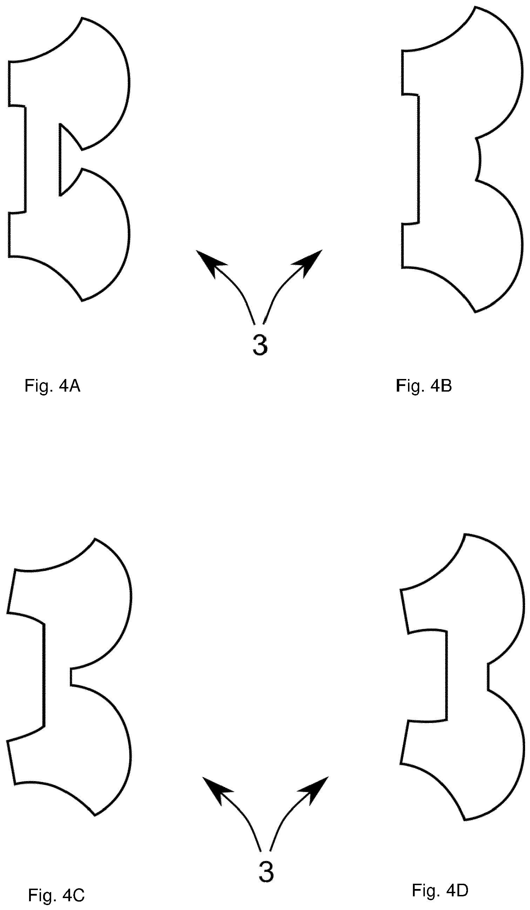

In der gezeigten Ausführung hat das Verbindungsteil 7 einen rechteckigen Querschnitt, der durch eine Vorderwand 14 und eine parallele Rückwand 15 begrenzt wird. Die Vorderwand 14 verbindet die Flächen 8 für den Lichtaustritt der beiden Zweige, während die Rückwand die Lateralseiten 11 der Zweige miteinander verbindet. In der gezeigten Ausführung geht das Verbindungsteil 7 ohne Unterbrechung durch den gesamten mittleren Teil des Lichtleiters 3. In einigen Ausführungen kann es unterbrochen sein oder einen anderen Querschnitt haben. Im Hinblick auf eine einfache Herstellung, z. B. bei der Entnahme aus der Form, ist jedoch ein konstanter rechteckiger Querschnitt vorzuziehen. In der gezeigten Ausführung werden die beiden Zweige durch das Verbindungsteil 7 so gedreht, dass ihre Flächen 8 für den Lichtaustritt in die gleiche Richtung weisen. In anderen Ausführungen können sie jedoch im Verhältnis zueinander geneigt sein, sowohl zueinander hin, so dass sich ihre Austrittslichtstrahlenbündel kreuzen, als auch voneinander weg, so dass das Bündel aus dem oberen Zweig mehr nach oben und derjenige aus dem unteren Zweig mehr nach unten gerichtet ist. Ein Beispiel für einen Querschnitt in dieser geneigten Variante ist in Fig. 4C (zueinander geneigte Zweige) und 4D (voneinander weg geneigte Zweige) dargestellt. Fig. 4A zeigt eine Variante, bei der das Verbindungsteil 7 die Mittelpunkte der Seitenwände der Zweige miteinander verbindet. Allerdings kann diese Variante, beispielsweise im Vergleich zu der in Fig. 2 gezeigten Ausführung, auch schwieriger zu fertigen sein - aus fertigungstechnischer Sicht ist es in der Regel vorteilhafter, wenn der Lichtleiter 3 keine Schrägen aufweist, die das Entformen erschweren würden.

In einigen Ausführungen kann der Lichtleiter 3 einen analog aufgebauten dritten Zweig umfassen, der über ein zweites Verbindungsteil 7 mit dem ersten oder zweiten Zweig 6 verbunden ist. Der dritte Zweig kann also auf die gleiche Weise wie der erste Zweig 5 oder der zweite Zweig 6 ausgeführt werden. Das zweite Verbindungsteil 7 kann auch wie das erste ausgeführt werden. Alle drei Zweige können dann das Licht in dieselbe Richtung lenken oder sie können zueinander geneigt werden.

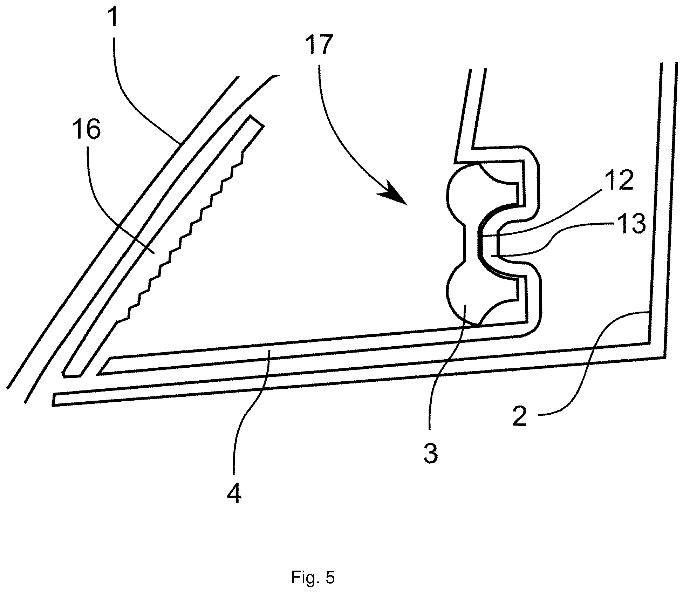

In anderen Ausführungen kann das Verbindungsteil 7 beispielsweise zwischen den Lateralseiten 11 der Zweige hindurchgeführt werden, ohne mit deren Vorderseiten 9, d. h. mit den Flächen 8 für den Lichtaustritt, in Berührung zu kommen. Vorzugsweise ist jedoch eine Rille 12 des Lichtleiters auf der Rückfläche des Lichtleiters 3 ausgebildet (siehe Figuren 2 und 5), wie im Folgenden näher beschrieben wird. In einigen Ausführungen können sich die Lichtquellen nur an einem Ende jedes Zweigs befinden. In einigen Ausführungen kann jeder Zweig einen anderen Querschnitt und/oder eine andere Größe haben. In einigen Ausführungen kann das Verbindungsteil 7 auch einen anderen Querschnitt haben, z. B. mit gebogenen oder gebrochenen Wänden (siehe Fig. 4B), oder es kann auch mit Auskoppelelementen an der Rückwand versehen sein, um mehr Licht durch die Vorderwand hindurchzulassen. Alle Varianten der Querschnitte des Lichtleiters 3 in Fig. 4 sind symmetrisch, aber auch unsymmetrische Varianten können in ähnlicher Weise realisiert werden. So kann beispielsweise jeder Zweig eine andere Neigung gegenüber den ebenen Flächen des Verbindungsteils 7 aufweisen, er kann eine anders geformte Wand haben usw.

In der beispielhaften Ausführung haben der erste Zweig 5 sowie der zweite Zweig 6 über den größten Teil ihrer Länge den gleichen und im Wesentlichen konstanten Querschnitt. Es handelt sich um einen so genannten Pilzquerschnitt, bei dem der Querschnitt durch eine geschlossene Kurve aus vier Teilen definiert ist, die entlang der Achse symmetrisch ist, die der Richtung der Lichtausstrahlung aus dem Lichtleiter 3 entspricht. Dieser Querschnitt hat also eine Vorderseite 9, durch die das Licht den Lichtleiter 3 verlässt, eine Rückseite 10, von der das Licht zur Vorderseite reflektiert wird, und zwei Lateralseiten 11. Die Lateralseiten 11 sind nach innen gewölbt, die Vorderseite 9 ist nach außen gewölbt, so dass sie im Wesentlichen als Linse dient und ihre Größe und ihr Krümmungsradius die Intensität des ausgestrahlten Lichts und den Winkel des ausgestrahlten Strahlenbündels beeinflussen, und die Rückseite 10 ist gerade. Die Vorderseite 9 des Querschnitts entspricht der Fläche 8 für den Lichtaustritt, d. h. sie ist auf die vordere Abdeckung 1 gerichtet. Die Rückseite 10 entspricht der Rückfläche des Lichtleiters 3, die der hinteren Abdeckung 2 zugewandt ist und die Auskoppelelemente trägt. Bei diesen Elementen kann es sich beispielsweise um Zähne oder Kerben handeln, die in regelmäßigen Abständen entlang der Länge des Lichtleiters 3 angeordnet sind. Die Auskoppelelemente sind in Fig. 6 zu sehen, wo sie durch den transparenten Körper des Lichtleiters 3 sichtbar sind.

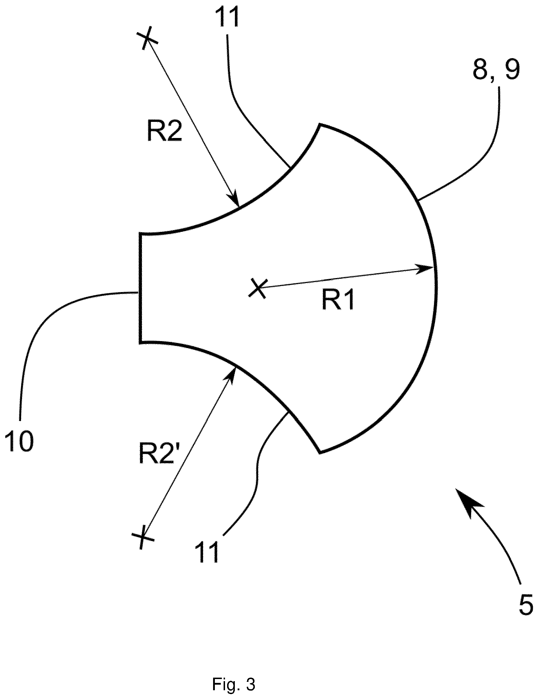

Eine Detailansicht des Querschnitts des ersten Zweigs 5, der in der beispielhaften Ausführung mit dem Querschnitt des zweiten Zweigs 6 identisch ist, ist in Fig. 3 dargestellt. Dieser Querschnitt wird zwischen den Auskoppelelementen geführt, so dass es keinen sichtbaren Ausschnitt/Vorsprung gibt, durch die das Licht zur Vorderseite 9 reflektiert wird. Der pilzförmige Querschnitt in der angedeuteten Ausführung hat sowohl die Lateralseiten 11 als auch die Vorderseite 9 kreisförmig gekrümmt, wobei der Krümmungsmittelpunkt der Krümmung der Vorderseite 9 mit dem Radius R1 innerhalb des Querschnitts liegt und die Krümmungsmittelpunkte der Lateralseiten 11 mit den Radien R2 und R2' außerhalb liegen. In der dargestellten Ausführung ist R2=R2', aber im Allgemeinen können sie unterschiedlich sein. In alternativen Ausführungen können diese gekrümmten Wände z. B. elliptisch, parabolisch, frei (sog. freeform) geformt sein, aus gebrochenen Flächen bestehen usw. Die Lateralseiten 11 können beispielsweise der Form allgemeiner optischer Flächen entsprechen, die im Querschnitt im Wesentlichen kreisförmig, d. h. annähernd kugelrund sind, aber nicht direkt Teile exakter geometrischer Kreise sein müssen. Die angegebenen Krümmungsradien können daher grundsätzlich entlang der Lateralseiten 11 nicht konstant sein. Die Lateralseiten 11 können auch eben sein, aber die Vorderseite 9 ist vorzugsweise nach außen gewölbt, wie in den gezeigten Ausführungen.

Die Kombination der beiden Pilzquerschnitte kann besonders vorteilhaft sein, da die Rille 12 des Lichtleiters auf der Rückseite 10 des Lichtleiters 3 gebildet wird, wie in Fig. 2 zu sehen ist. Diese Rille wird von den Lateralseiten 11 der beiden Zweige und der Rückwand 15 des Verbindungsteils 7 begrenzt und verläuft über die gesamte Länge des Verbindungsteils 7, d. h. über den größten Teil der Länge des Lichtleiters 3. Der komplementäre Vorsprung 13 der Halterung 4 des Lichtleiters 3 greift in diese Rille 12 des Lichtleiters ein. Durch die Kombination der Rille 12 des Lichtleiters mit dem Vorsprung 13 der Halterung 4 wird der Lichtleiter 3 in seiner Position gehalten und kann nicht verrutschen oder vibrieren. Die Oberfläche des Vorsprungs 13 kann daher auch mit einem Dämpfungselement, z. B. einer Gummi- oder Silikonschicht, versehen sein, um Vibrationen zu dämpfen. Die Oberfläche der Halterung 4 kann auch mit einer reflektierenden Schicht versehen sein, um das Licht zu reflektieren, das vom Lichtleiter 3 nach hinten ausgekoppelt wird, um genutzt zu werden. Wie aus Figur 1 ersichtlich ist, kann die Fixierung des Lichtleiters in der Halterung 4 des Lichtleiters 3 auch dadurch erfolgen, dass der Lichtleiter 3 seitlich, d.h. oben und unten, durch die Halterung 4 des Lichtleiters 3 eingespannt wird. Die Halterung 4 ist dann so geformt, dass sie eine Rille 17 der Halterung für alle Zweige des Lichtleiters 3 umfasst, wobei die Rille 17 der Halterung durch den genannten Vorsprung 13 geteilt ist. Der hintere Teil eines jeden Zweigs greift in die Rille 17 der Halterung ein, wobei der Vorsprung 13 zwischen den Zweigen in der Rille 12 des Lichtleiters sitzt. So kann der Lichtleiter 3 in die Halterung 4 des Lichtleiters 3 eingesetzt und eventuell auch mit der Halterung 4 durch Vorspannung festgeklemmt werden. Die Form des Lichtleiters 3 in der erfindungsgemäßen Baugruppe kann somit eine höhere Lichtstärke, eine einfachere Herstellung und darüber hinaus eine einfachere Montage in der formangepassten Halterung 4 des Lichtleiters 3 ermöglichen. In der Ausführung in Fig. 1 ist die Rille 17 der Halterung ohne den Vorsprung 13 ausgebildet, was die Montage oder Herstellung der Halterung 4 erleichtern kann.

Anstelle von Pilzformen kann z. B. ein runder Querschnitt des Zweigs verwendet werden. Beispielsweise können die beiden Zweige einen kreisförmigen Querschnitt haben, wobei die Rückwand 15 zugeschnitten und mit Auskoppelelementen versehen ist. Es ist auch möglich, z.B. an einem Lichtleiter 3 einen Zweig mit Pilzquerschnitt und einen Zweig mit rundem Querschnitt zu kombinieren.

Alternativ oder zusätzlich kann der Lichtleiter 3 mit der Halterung 4 verschraubt, verklebt, verschweißt usw. werden. Die Halterung 4 des Lichtleiters 3 kann ebenfalls mit der hinteren Abdeckung 2 verklebt, verschweißt, verschraubt oder vernietet werden usw. Jede von diesen Methoden kann auch verwendet werden, um die vordere Abdeckung 1 mit der hinteren Abdeckung 2 zu verbinden. Die Verbindung der Abdeckungen kann auch eine Dichtung enthalten, um das Eindringen von Feuchtigkeit oder Staub in die Baugruppe zu verhindern.

Die Baugruppe kann ferner einen optischen Filter 16 umfassen, der in der in Fig. 1 dargestellten Ausführung die Form einer Platte hat, die zwischen dem Lichtleiter 3 und der vorderen Abdeckung 1 verläuft. Die Oberfläche des optischen Filters 16, d. h. die Vorder- und/oder Rückoberfläche, kann mit einer Oberflächenbehandlung versehen sein, um die optischen Eigenschaften des durchgelassenen Lichts zu verändern. Es kann sich beispielsweise um eine gebrochene Oberfläche, die Schaffung von Vorsprüngen oder Kerben, mikrooptische Elemente usw. handeln, die die Homogenität des durchgehenden Lichts erhöhen und/oder das Licht lenken und/oder streuen usw. Es kann sich um Elemente mit zufälliger Form handeln, die beispielsweise nur dazu dienen, die Oberfläche matter oder milchiger zu machen, es kann sich aber auch um Elemente handeln, deren Form durch Berechnungen oder Simulationen ermittelt wird, um die gewünschte Funktion zu erreichen, z. B., um Abglanz zu beseitigen, das Licht auf die Straße zu lenken usw. Schematisch sind solche Elemente auf der Rückseite des optischen Filters 16 in Fig. 5 dargestellt.

Bei der in Fig. 1 gezeigten Ausführung ist das Innerraum des Grills, das von der vorderen Abdeckung 1 und der hinteren Abdeckung 2 umschlossen wird, etwa in der oberen Hälfte des Grills ausgebildet. Die untere Hälfte kann dann zum Beispiel offen sein und dadurch kann die Luft in den Motorraum strömen, oder sie kann die vordere Abdeckung 1 aus einem anderen Material haben usw.

Die Lichtquellen der Baugruppe, die das Licht in den Lichtleiter 3 einspeisen, können weiß sein, so dass der Grill z. B. für das Tagfahrlicht verwendet werden kann. Es ist jedoch auch möglich, alternativ oder zusätzlich z. B. ein oranges Licht zur Ergänzung der Funktion der Blinkleuchten, ein blaues Licht zur Verwendung als Blaulicht usw. zu verwenden.

Die erfindungsgemäße Baugruppe, z. B. in den oben beschriebenen Ausführungen, kann Teil eines Personenkraftwagens sein. Ein solches Kraftfahrzeug umfasst Standard-Automobilkomponenten wie Räder, Karosserie, Motor, Scheiben, Sitze usw. Im Vorderteil der Karosserie ist eine Montageöffnung für einen Kühlergrill vorgesehen, in der die erfindungsgemäße Baugruppe montiert wird. Die Baugruppe kann zum Beispiel zusammengebaut werden und erst später in das Kraftfahrzeug eingebaut werden, zum Beispiel durch Verschraubung.

### Bezugszeichenliste

1. vordere Abdeckung
2. hintere Abdeckung
3. Lichtleiter
4. Halterung
5. erster Zweig
6. zweiter Zweig
7. Verbindungsteil
8. Fläche für den Lichtaustritt
9. Vorderseite
10. Rückseite
11.Lateralseite
12. Rille des Lichtleiters
13. Vorsprung
14. Vorderwand
15. Rückwand
16. optischer Filter
17. Rille der Halterung

## Patentansprüche

1. Durchleuchtete Kühlergrill-Baugruppe zur Montage im Vorderteil eines Kraftfahrzeugs, die eine lichtdurchlässige vordere Abdeckung (1) und eine lichtundurchlässige hintere Abdeckung (2) umfasst, zwischen denen ein Innenraum des Grills begrenzt ist, wobei die Baugruppe weiterhin im Innenraum des Grills einen länglichen Lichtleiter (3), eine Halterung (4) des Lichtleiters (3) und wenigstens zwei Lichtquellen umfasst, wobei der Lichtleiter (3) durch die Halterung (4) des Lichtleiters (3) an der hinteren Abdeckung (2) befestigt ist, **dadurch gekennzeichnet, dass** der Lichtleiter (3) einen ersten Zweig (5), einen zweiten Zweig (6) und ein Verbindungsteil (7) umfasst, die aus einem Stück eines lichtdurchlässigen Materials sind und gegenseitig parallel über den größten Teil der Länge des Lichtleiters (3) verlaufen, wobei der erste Zweig (5) über den größten Teil der Länge des Lichtleiters (3) durch ein Verbindungsteil (7) mit dem zweiten Zweig (6) fest verbunden ist und wobei jeder der Zweige eine Fläche (8) für den Lichtaustritt umfasst, die entlang des größten Teils der Länge des Lichtleiters (3) verläuft und zur vorderen Abdeckung (1) gerichtet ist und weiterhin ist jeder von Zweigen an mindestens einem seiner Enden mit einer Fläche für den Lichteintritt versehen, zu der wenigstens eine der Lichtquellen gerichtet ist.

2. Durchleuchtete Kühlergrill-Baugruppe nach Anspruch 1, **dadurch gekennzeichnet, dass** der erste Zweig (5) und/oder der zweite Zweig (6) im Querschnitt eine Vorderseite (9), eine Rückseite (10) und zwei die Vorderseite (9) mit der Rückseite (10) verbindende Lateralseiten (11) aufweist, wobei die Vorderseite (9) Teil der Fläche (8) für den Lichtaustritt ist, wobei die Vorderseite (9) von diesem Querschnitt aus nach außen gewölbt ist und die beiden Lateralseiten (11) nach innen gewölbt sind.

3. Durchleuchtete Kühlergrill-Baugruppe nach einem der vorhergehenden Ansprüche, **dadurch gekennzeichnet, dass** jeder der Zweige eine Reihe von Auskoppelelementen umfasst, die gegenüber der Fläche (8) für den Lichtaustritt angeordnet sind.

4. Durchleuchtete Kühlergrill-Baugruppe nach einem der vorhergehenden Ansprüche, **dadurch gekennzeichnet, dass** der Lichtleiter (3) über den größten Teil seiner Länge symmetrisch zu einer Ebene ist, die zwischen den Zweigen durch das Verbindungsteil (7) verläuft.

5. Durchleuchtete Kühlergrill-Baugruppe nach einem der vorhergehenden Ansprüche, **dadurch gekennzeichnet, dass** der Lichtleiter (3) eine Rille (12) des Lichtleiters aufweist, die sich über den größten Teil seiner Länge erstreckt, wobei die Rille (12) des Lichtleiters durch einen Teil des ersten Zweigs (5), einen Teil des zweiten Zweigs (6) und einen Teil des Verbindungsteils (7) definiert ist, wobei die Rille (12) des Lichtleiters zur hinteren Abdeckung (2) gerichtet ist und die Halterung (4) des Lichtleiters (3) einen Vorsprung (13) aufweist, der in die Rille (12) des Lichtleiters eingreift.

6. Durchleuchtete Kühlergrill-Baugruppe nach einem der vorhergehenden Ansprüche, **dadurch gekennzeichnet, dass** das Verbindungsteil (7) eine Vorderwand (14) und eine Rückwand (15) aufweist, die parallel sind, wobei die Vorderwand (14) zwischen den Flächen (8) für den Lichtaustritt der beiden Zweige verläuft und die Rückwand (15) näher an der hinteren Abdeckung (2) liegt als die Vorderwand (14).

7. Durchleuchtete Kühlergrill-Baugruppe nach einem der vorhergehenden Ansprüche, **dadurch gekennzeichnet, dass** sie außerdem einen optischen Filter (16) umfasst, der zwischen dem Lichtleiter (3) und der vorderen Abdeckung (1) angeordnet ist.

8. Durchleuchtete Kühlergrill-Baugruppe nach einem der vorhergehenden Ansprüche, **dadurch gekennzeichnet, dass** die Halterung (4) des Lichtleiters (3) eine Rille (17) der Halterung aufweist, wobei der Lichtleiter (3) zumindest teilweise in die Rille (17) der Halterung eingreift, wobei sich sowohl der erste Zweig (5) als auch der zweite Zweig (6) teilweise in der Rille (17) der Halterung befinden, wobei die Fläche (8) für den Lichtaustritt jedes der Zweige aus der Rille (17) der Halterung hervorsteht.

9. Durchleuchtete Kühlergrill-Baugruppe nach einem der vorhergehenden Ansprüche, **dadurch gekennzeichnet, dass** die vordere Abdeckung (1) von hinten auf einem Teil ihrer Oberfläche mit einer Schicht aus nicht lichtdurchlässigem Material versehen ist.

10. Durchleuchtete Kühlergrill-Baugruppe nach Anspruch 9, **dadurch gekennzeichnet, dass** diese Schicht Lücken für den Durchgang von Licht durch die vordere Abdeckung (1) aufweist.
